# EUROPEAN PATENT SPECIFICATION

(11) **EP 1 365 588 B1**
(45) Date of publication and mention of the grant of the patent: **06.11.2013**
(21) Application number: 03290874.1
(22) Date of filing: 08.04.2003
(51) Int. Cl.: H04H 20/16, H04H 60/39, H04N 7/16, H04N 21/236, H04N 21/262, H04N 21/6547, H04N 21/84, H04N 21/8549

(54) **Method for transmitting an electronic programme guide containing previews and corresponding data stream**
Verfahren zur Übertragung eines Vorschauen enthaltenden elektronischen Programmführers und entsprechenden Datenstrom
Procédé de transmission d'un guide électronique de programmes contenant des bandes annonce et trame de données correspondante

(30) Priority: 11.04.2002 FR 0204520
(43) Date of publication of application: 26.11.2003
(73) Proprietor: Thomson Licensing, 92130 Issy-les-Moulineaux (FR)
(72) Inventor: Fraleu, Sébastien, 35530 Noyal Sur Vilaine (FR); Quere, Thierry, 35160 Monfort sur Meu (FR); Magras, André, 35760 St Gregoire (FR)
(74) Representative: Ruellan-Lemonnier, Brigitte

(56) References cited:
- EP-A- 1 107 600
- WO-A-01/56272
- WO-A-98/26596
- WO-A-99/57903
- US-A- 5 594 509
- US-A- 6 047 317

## Description

### Field of the invention

The invention relates to the transmission of a data stream constituting an electronic programme guide containing video and/or audio previews, and intended to be downloaded into a digital services decoder for television receiver in particular.

### Background art

The running of an electronic programme guide by the decoder provides on the screen of the television receiver, a programme grid in which various video and/or audio transmissions are chronologically listed in relation to the number of the station which broadcasts them. The user can thus scan the grid so as to display on the screen of his television receiver, the titles, descriptions and times of programming of the video and/or audio transmissions that he wishes to watch and/or to hear before switching his television receiver over to receive the corresponding station. An electronic programme guide containing video previews additionally allows the user to view for example a short extract of the video film referenced in the programme grid.

The patent documents US-A-5751282 and WO-98/26596 make reference to such an electronic programme guide called an EPG.

US6047317 discloses a video presentation system that receives a plurality of series of data segments that are cyclically transmitted, wherein certain of the segments of higher priority are present in the form of plural, time spaced copies during a series of the digital data segments.

The following sections help in the comprehension of the invention and are not to be considered as an admission of prior art.

The data stream constituting an electronic programme guide is transmitted cyclically by a sender at a speed of around 3 Mb/s. It is generally refreshed daily. The time of a cycle corresponds to the transmission time of the data stream which is modulated on a carrier according to a carousel or an endless loop.

The data stream comprises, in this order, a so-called "Data Descriptor" data block, a so-called "Main Code" data block, a so-called "Screen Data" data block, a succession of so-called "Text Data" data blocks and a succession of so-called "Preview Data" data blocks. The "Data Descriptor" block contains a directory of the data blocks of the stream. The "Main Code" block contains a routine intended for the decoder for the loading into memory and the running of the electronic programme guide in the decoder. The "Screen Data" block contains screen display parameters for the display in particular of a wait screen and of the programme grid supplemented with the programme descriptions and previews. The "Text data" blocks each contain a textual description associated with a video and/or audio transmission referenced in the electronic programme guide. The "Preview Data" blocks each contain a video and/or audio preview associated with a video and/or audio transmission referenced in the electronic programme guide. The "Data Descriptor", "Main Code" and "Screen Data" header blocks of the data stream generally occupy around 500 Kbytes and the "Text Data" blocks generally occupy around 1 Mbytes. The video and/or audio previews contained in the "Preview Data" blocks are generally compressed to the MPEG format. Despite this data compression format, a compressed video preview of 15 seconds for example represents a large amount of data to be transmitted that can be estimated at around 1 Mbytes minimum. As a result, the transmission cycle time of a data stream constituting an electronic programme guide containing some ten previews is of the order of 31 seconds, this possibly giving rise to considerable standby times for access to the EPG service by the user.

In particular, in response to a request for access to the EPG service by the user from a remote control of his television receiver, the decoder awaits the reception of the "Data Descriptor" block of a current data stream so as to subsequently retrieve the other data blocks which follow in the stream. Upon reception of the "Screen Data" block, a wait screen is generally presented on the television receiver to alert the user that his request for access to the EPG service has been taken into account. The programme grid is thereafter presented on the television receiver upon reception of the entire set of "Text Data" blocks, thereby allowing the user to scan the textual descriptions associated with the programme grid. A screen specific to the previews may be presented on the television receiver upon reception of the first or of the entire set of "Preview Data" blocks.

Since the loading of the electronic programme guide into the decoder must begin with the header blocks of the stream, it is understood that if the request for access to the EPG service by the user is made just prior to the transmission of the "Data Descriptor" block of a current data stream, the wait screen may be represented on the television receiver after a short waiting pause that can be estimated at around 1.5 seconds, this corresponding to the loading time of the header data blocks. On the other hand, if the user's request is made just after the transmission of the "Data Descriptor" block of a current stream, the waiting time for the display of the wait screen will be slightly greater than the duration of a transmission cycle of the data stream, that is to say around 32 seconds. Consequently, the mean waiting time for access to the EPG service by the user is around 17 seconds with a data stream containing some ten video and/or audio previews.

### Summary of the invention

An aim of the invention is to propose a solution for reducing this mean waiting time without increasing the speed of transmission of the stream. To this end, the invention relates according to a first aspect to a data stream constituting an electronic programme guide containing video and/or audio previews, and intended to be downloaded into a digital services decoder for television receiver. The data stream comprises first header data blocks containing a directory of the data blocks of the stream, a routine intended for the decoder for the loading into memory and the running of the electronic programme guide in the decoder, and screen display parameters. The data stream also comprises second data blocks each containing a video and/or audio preview. The first header data blocks are repeated in the stream between the second data blocks.

This structure of the data stream affords the decoder the possibility of downloading the header data blocks of the current stream even if the user has made his request for access to the EPG service during the transmission of this current stream. As a result, the user's mean waiting time to view the presentation of the wait screen of the electronic programme guide on his television receiver is thus decreased. The convenience of use of the EPG service is thereby improved without structurally modifying the decoder or increasing the speed of transmission of the data stream.

According to particular features of the data stream according to the invention, the first header data blocks are repeated each time in the stream between two second adjacent data blocks in the stream. The data stream comprises third data blocks containing a textual description of the programmes referenced in the electronic programme guide, the third data blocks together with the first header data blocks being repeated in the stream between the second data blocks. The third data blocks together with the first header data blocks are repeated each time between two second adjacent data blocks in the stream. The stream comprises a sequence consisting of the first header data blocks, of the third data blocks, of the first header data blocks, and of a second data block, this sequence being repeated in the stream as many times as there are second data blocks in the stream.

The invention also relates according to a second aspect to a method for transmitting a data stream constituting an electronic programme guide comprising video and/or audio previews, the stream having a structure as indicated hereinabove.

The invention also relates to a method for generating a programme grid in a decoder for display by a television receiver comprising the steps of: receiving in a decoder a data stream constituting an electronic programme guide and having a structure as described hereinabove and of generating a programme grid in the decoder, the programme grid containing firstly a textual description of the programmes if third data blocks have been received first by the decoder or containing firstly a video and/or audio preview if second data blocks have been received first by the decoder.

### Brief description of the drawings

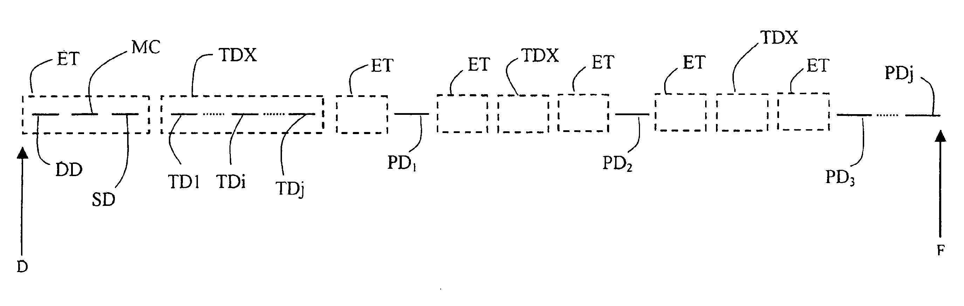

The invention will be even better understood on reading the description which follows of an exemplary structure of a data stream, illustrated by the single figure.

### Detailed description of embodiments of the invention

In the figure, the data stream constituting an electronic programme guide comprises, in this order, a "Data Descriptor" data block denoted DD, a "Main Code" data block denoted MC, a "Screen Data" data block denoted SD. These three data blocks constitute the header data blocks and are together denoted by the reference ET. They are followed by several consecutive "Text Data" data blocks denoted TD1,TDi,TDj. Generally, a stream contains around 500 "Text Data" blocks. The entire set of "Text Data" blocks is denoted TDX. In the figure, the references PD1,PD2,PD3,PDj denote "Preview Data" blocks. In the case of the example, the stream comprises some ten "Preview Data" blocks.

The size of the header blocks ET is estimated at 500 Kbytes. Each "Text Data" block occupies around 2 Kbytes so that the size of the entire set TDX of "Text Data" blocks is estimated at 1 Mbytes. The size of a "Preview Data" block is estimated at 1 Mbytes.

As visible in the figure, the header blocks ET are repeated in the stream between the "Preview Data" blocks so as to allow the decoder to download the header blocks ET of a current stream even when the user makes a request for access to the EPG service during the transmission of this current stream. The time required for the presentation of the wait screen on the television receiver is thus reduced as compared with a stream structure where the "Preview Data" blocks are arranged consecutively one after the other.

Depending on the moment at which the user requests access to the EPG service, the decoder firstly receives "Text Data" blocks or "Preview Data" blocks and triggers the display on the screen of the television receiver of a programme guide in which a textual description of the events of the programme grid is posted first (if the decoder has received the "Text Data" blocks first) or else in which a preview of an event is posted first in the programme grid (if the decoder has received the "Preview Data" blocks first).

As visible in the figure, the sequence situated at the beginning of the stream, consisting of the header blocks ET of the entire set TDX of "Text Data" blocks, of the header blocks ET and of a "Preview Data" block, is repeated in the stream as many times as there are "Preview Data" blocks in the stream. This structure makes it possible to obtain a mean waiting time for the presentation of the programme grid of the order of 8 seconds with a speed of transmission of the stream of the order of 3 Mb/s. With this stream structure, a preview contained in a "Preview Data" block can be available on the television receiver after a mean waiting time of the order of 8 seconds. The mean waiting time for the presentation of the wait screen on the television receiver is of the order of 3.5 seconds, this being identical to a data stream with no preview.

If instead of repeating the above sequence each time between two adjacent "Preview Data" blocks in the stream, only the header block ET is repeated, a preview may be available on the television receiver after a waiting time of the order of 6 seconds but the mean waiting time for the presentation of the programme grid is of the order of 24 seconds. The mean waiting time for the presentation of the wait screen on the television receiver is around 3.5 seconds.

In the figure, the arrows D and F respectively indicate the beginning and the end of the data stream constituting the electronic programme guide which is downloaded into an integrated or nonintegrated digital decoder for television receiver or the like. As this stream is transmitted cyclically according to a carousel or an endless loop, with daily refreshing, the repetition in the current stream as indicated above of the header blocks ET and of the entire set of "Text Data" blocks does not introduce any particular difficulties of implementation at the level of the sender of the data stream. It will also be noted that the invention applies equally in the case of an independent decoder plugged into a television receiver as in the case of an integrated decoder built into a television receiver to form a digital television.

## Claims

1. Data stream constituting an electronic programme guide containing video and/or audio previews of video and/or audio transmissions referenced in said electronic programming guide, and intended to be downloaded into a decoder, the data stream comprising first header data blocks (DD, MC,SD) containing a directory of the data blocks of the stream, **characterized in that** the first header further contains a routine intended for the decoder for the loading into memory and the running of the electronic programme guide in the decoder, and screen display parameters for display of a wait screen and of a programme grid supplemented with programme description and previews, and **in that** the data stream further comprises second data blocks (PD1,PD2,PD3) each containing a video and/or audio preview, and **in that** the first header data blocks (DD,MC,SD) are repeated in the stream between the second data blocks (PD1,PD2,PD3).

2. Stream according to Claim 1, comprising third data blocks (TD1,TDi,TDj) containing a textual description of the programmes referenced in the electronic programme guide, and in which the third data blocks (TD,TDi,TDj) together with the first header data blocks (DD,MC,SD) are repeated in the stream between the second data blocks (PD1,PD2,PD3).

3. Stream according to Claim 2, comprising a sequence consisting of the first header data blocks (DD,MC,SD), of the third data blocks (TD1,TDi,TDj), of the first header data blocks (DD,MC,SD), and of a second data block, this sequence being repeated in the stream as many times as there are second data blocks (PD1,PD2,PD3) in the stream.

4. Method for transmitting a data stream constituting an electronic programme guide containing video and/or audio previews of video and/or audio transmissions referenced in said electronic programming guide, and intended to be downloaded into a decoder, the data stream comprising first header data blocks (DD,MC,SD) containing a directory of the data blocks of the stream, **characterized in that** the first header further contains a routine intended for the decoder for the loading into memory and the running of the electronic programme guide in the decoder, and screen display parameters for display of a wait screen and of a programme grid supplemented with programme description and previews, and **in that** the data stream further comprises second data blocks (PD1,PD2,PD3) each containing a video and/or audio preview, and **in that** the method comprises a step consisting in repeating in the stream the first header data blocks (DD,MC,SD) between the second data blocks (PD1 ,PD2,PD3).

5. Method according to Claim 4, the stream comprising third data blocks (TD1,TDi,TDj) containing a textual description of the programmes referenced in the electronic programme guide, the method further comprising a step of repeating in the stream the third data blocks (TD1 ,TDi,TDj) together with the first header data blocks (DD,MC,SD) between the second data blocks.

6. Method according to Claim 5, in which a sequence consisting of the first header data blocks (DD,MC,SD), of the third data blocks (TD1,TDi,TDj), of the first header data blocks (DD,MC,SD), and of a second data block, is repeated in the stream as many times as there are second data blocks in the stream.

7. Method for generating a programme grid in a decoder for display by a television receiver comprising the steps of:
(a) receiving in a decoder a data stream constituting an electronic programme guide and comprising
- first header data blocks (DD,MC,SD) containing a directory of the data blocks of the stream, a routine intended for the decoder for the loading into memory and the running of the electronic programme guide in the decoder, and screen display parameters for the display of a wait screen and of a programme grid supplemented with programme description and previews;
- second data blocks (PD1,PD2,PD3) each containing a video and/or audio preview of a video and/or audio transmission referenced in said electronic programming guide; and
- third data blocks (TD1,TDi,TDj) containing a textual description of the programmes referenced in the electronic programme guide, in which stream the third data blocks (TD1,TDi,TDj) together with the first header data blocks (DD,MC,SD) are repeated in the stream between the second data blocks (PD1 ,PD2,PD3), and
(b) generating a programme grid in the decoder, the programme grid containing firstly a textual description of the programmes if third data blocks (TD1,TDi,TDj) have been received first by the decoder or containing firstly a video and/or audio preview if second data blocks (PD1, PD2, PD3) have been received first by the decoder.

## Patentansprüche

1. Datenstrom, der einen elektronischen Programmführer bildet, der Video- und/oder Audiovorschauen von Video- und/oder Audiosendungen enthält, auf die in dem elektronischen Programmführer Bezug genommen wird, und der dafür bestimmt ist, in einen Decoder heruntergeladen zu werden, wobei der Datenstrom Datenblöcke (DD, MC, SD) eines ersten Anfangsblocks umfasst, die ein Verzeichnis der Datenblöcke des Stroms enthalten, **dadurch gekennzeichnet, dass** der erste Anfangsblock ferner eine Routine, die dafür bestimmt ist, dass sie der Decoder in den Speicher lädt und den elektronischen Programmführer in dem Decoder ausführt, und Bildschirmanzeigeparameter zur Anzeige eines Wartebildschirms und eines mit einer Programmbeschreibung und mit Vorschauen ergänzten Programmschemas enthält, und dadurch, dass der Datenstrom ferner zweite Datenblöcke (PD1, PD2, PD3) umfasst, die jeweils eine Video- und/oder Audiovorschau enthalten, und dadurch, dass die Datenblöcke (DD, MC, SD) eines ersten Anfangsblocks in dem Strom zwischen den zweiten Datenblöcken (PD1, PD2, PD3) wiederholt sind.

2. Strom nach Anspruch 1, der dritte Datenblöcke (TD1, TDi, TDj), die eine Textbeschreibung der Programme enthalten, auf die in dem elektronischen Programmführer Bezug genommen wird, umfasst, und in dem die dritten Datenblöcke (TD1, TDi, TDj) zusammen mit den Datenblöcken (DD, MC, SD) eines ersten Anfangsblocks in dem Strom zwischen den zweiten Datenblöcken (PD1, PD2, PD3) wiederholt sind.

3. Strom nach Anspruch 2, der eine Folge umfasst, die aus den Datenblöcken (DD, MC, SD) eines ersten Anfangsblocks, aus den dritten Datenblöcken (TD1, TDi, TDj), aus den Datenblöcken (DD, MC, SD) eines ersten Anfangsblocks und aus einem zweiten Datenblock besteht, wobei diese Folge in dem Strom so oft wiederholt ist, wie es zweite Datenblöcke (PD1, PD2, PD3) in dem Strom gibt.

4. Verfahren zum Übertragen eines Datenstroms, der einen elektronischen Programmführer bildet, der Video-und/oder Audiovorschauen von Video- und/oder Audiosendungen enthält, auf die in dem elektronischen Programmführer Bezug genommen wird, und der dafür bestimmt ist, in einen Decoder heruntergeladen zu werden, wobei der Datenstrom Datenblöcke (DD, MC, SD) eines ersten Anfangsblocks umfasst, die ein Verzeichnis der Datenblöcke des Stroms enthalten, **dadurch gekennzeichnet, dass** der erste Anfangsblock ferner eine Routine, die dafür bestimmt ist, dass sie der Decoder in den Speicher lädt und den elektronischen Programmführer in dem Decoder ausführt, und Bildschirmanzeigeparameter zur Anzeige eines Wartebildschirms und eines mit einer Programmbeschreibung und mit Vorschauen ergänzten Programmschemas enthält, und dadurch, dass der Datenstrom ferner zweite Datenblöcke (PD1, PD2, PD3) umfasst, die jeweils eine Video- und/oder Audiovorschau enthalten, und dadurch, dass das Verfahren einen Schritt umfasst, der darin besteht, dass die Datenblöcke (DD, MC, SD) eines ersten Anfangsblocks in dem Strom zwischen den zweiten Datenblöcken (PD1, PD2, PD3) wiederholt werden.

5. Verfahren nach Anspruch 4, wobei der Strom dritte Datenblöcke (TD1, TDi, TDj), die eine Textbeschreibung der Programme enthalten, auf die in dem elektronischen Programmführer Bezug genommen wird, umfasst, und wobei das Verfahren ferner einen Schritt umfasst, in dem die dritten Datenblöcke (TD1, TDi, TDj) zusammen mit den Datenblöcken (DD, MC, SD) eines ersten Anfangsblocks in dem Strom zwischen den zweiten Datenblöcken wiederholt werden.

6. Verfahren nach Anspruch 5, in dem eine Folge, die aus den Datenblöcken (DD, MC, SD) eines ersten Anfangsblocks, aus den dritten Datenblöcken (TD1, TDi, TDj), aus den Datenblöcken (DD, MC, SD) eines ersten Anfangsblocks und aus einem zweiten Datenblock besteht, in dem Strom so oft wiederholt wird, wie es zweite Datenblöcke in dem Strom gibt.

7. Verfahren zum Erzeugen eines Programmschemas in einem Decoder zur Anzeige durch einen Fernsehempfänger, wobei das Verfahren die folgenden Schritte umfasst:
(a) Empfangen eines Datenstroms, der einen elektronischen Programmführer bildet, in einem Decoder, wobei der Datenstrom Folgendes umfasst:
- Datenblöcke (DD, MC, SD) eines ersten Anfangsblocks, die ein Verzeichnis der Datenblöcke des Stroms, eine Routine, die dafür bestimmt ist, dass sie der Decoder in den Speicher lädt und den elektronischen Programmführer in dem Decoder ausführt, und Bildschirmanzeigeparameter für die Anzeige eines Wartebildschirms und eines mit Programmbeschreibungen und Vorschauen ergänzten Programmschemas enthalten;
- zweite Datenblöcke (PD1, PD2, PD3), die jeweils eine Video- und/oder eine Audiovorschau einer Video- und/oder Audiosendung enthalten, auf die in dem elektronischen Programmführer Bezug genommen wird; und
- dritte Datenblöcke (TD1, TDi, TDj), die eine Textbeschreibung der Programme enthalten, auf die in dem elektronischen Programmführer Bezug genommen wird, wobei die dritten Datenblöcke (TD1, TDi, TDj) zusammen mit den Datenblöcken (DD, MC, SD) eines ersten Anfangsblocks in dem Strom zwischen den zweiten Datenblöcken (PD1, PD2, PD3) wiederholt sind, und
(b) Erzeugen eines Programmschemas in dem Decoder, wobei das Programmschema zunächst eine Textbeschreibung der Programme enthält, falls von dem Decoder zunächst dritte Datenblöcke (TD1, TDi, TDj) empfangen worden sind, oder zunächst eine Video-und/oder Audiovorschau enthält, falls von dem Decoder zunächst zweite Datenblöcke (PD1, PD2, PD3) empfangen worden sind.

## Revendications

1. Flux de données constituant un guide électronique de programmes contenant des bandes annonces vidéo et/ou audio de transmissions vidéo et/ou audio référencées dans ledit guide électronique de programmes, et destinées à être téléchargées dans un décodeur, le flux de données comprenant des premiers blocs de données d'en-tête (DD, MC, SD) contenant un répertoire des blocs de données du flux, **caractérisé en ce que** le premier en-tête contient en outre une routine destinée au décodeur pour le chargement dans la mémoire et la lecture du guide électronique de programmes dans le décodeur, ainsi que des paramètres d'affichage à l'écran pour l'affichage d'un écran d'attente et d'une grille de programmes complétée par des descriptions et des bandes- annonces et **en ce que** le flux de données comprend en outre des deuxièmes blocs de données (PD1, PD2, PD3) contenant chacun une bande annonce vidéo et/ou audio, et **en ce que** les premiers blocs de données d'en-tête (DD, MC, SD) sont répétés dans le flux entre les deuxièmes blocs de données (PD1, PD2, PD3).

2. Flux selon la revendication 1, comprenant des troisièmes blocs de données (TD1, TDi, TDj) contenant une description textuelle des programmes référencés dans le guide électronique de programmes, et dans lequel les troisièmes blocs de données (TD1, TDi, TDj) ainsi que les premiers blocs de données d'en-tête (DD, MC, SD) sont répétés dans le flux entre les deuxièmes blocs de données (PD1, PD2, PD3).

3. Flux selon la revendication 2, comprenant une séquence constituée des premiers blocs de données d'en-tête (DD, MC, SD), des troisièmes blocs de données (TD1, TDi, TDj), des premiers blocs de données d'en-tête (DD,MC,SD), et d'un deuxième bloc de données, cette séquence étant répétée dans le flux autant de fois qu'il y a de deuxièmes blocs de données (PD1, PD2, PD3) dans le flux.

4. Procédé pour la transmission d'un flux de données constituant un guide électronique de programmes contenant des bandes annonces vidéo et/ou audio de transmissions vidéo et/ou audio référencées dans ledit guide électronique de programmes, et destinées à être téléchargées dans un décodeur, le flux de données comprenant des premiers blocs de données d'en-tête (DD, MC, SD) contenant un répertoire des blocs de données du flux, **caractérisé en ce que** le premier en-tête contient en outre une routine destinée au décodeur pour le chargement dans la mémoire et le fonctionnement du guide électronique de programmes du décodeur, ainsi que des paramètres d'affichage à l'écran pour l'affichage d'un écran d'attente et d'une grille de programmes complémentée de descriptions et de bandes annonces, et **en ce que** le flux de données comprend en outre des deuxièmes blocs de données (PD1, PD2, PD3) contenant chacun une bande annonce vidéo et/ou audio, et **en ce que** le procédé comprend une étape consistant en la répétition, dans le flux, des premiers blocs de données d'en-tête (DD, MC, SD) entre les deuxièmes blocs de données (PD1, PD2, PD3).

5. Procédé selon la revendication 4, le flux comprenant des troisièmes blocs de données (TD1, TDi, TDj) contenant une description textuelle des programmes référencés dans le guide électronique de programmes, le procédé comprenant en outre une étape de répétition, dans le flux, des troisièmes blocs de données (TD1, TDi, TDj) ainsi que des premiers blocs de données d'en-tête (DD, MC, SD) entre les deuxièmes blocs de données.

6. Procédé selon la revendication 5, dans lequel une séquence constituée des premiers blocs de données d'en-tête (DD, MC, SD), des troisièmes blocs de données (TD1,TDi,TDj), des premiers blocs de données d'en-tête (DD,MC,SD), et d'un deuxième bloc de données, est répétée dans le flux autant de fois qu'il y a de deuxièmes blocs de données dans le flux.

7. Procédé pour la génération d'une grille de programmes dans un décodeur pour affichage par un récepteur de télévision comprenant les étapes de :
(a) réception dans un décodeur d'un flux de données constituant un guide électronique de programmes et comprenant
- des premiers blocs de données d'en-tête (DD, MC, SD) contenant un répertoire des blocs de données du flux, une routine destinée au décodeur pour le chargement dans la mémoire et la lecture du guide électronique de programmes dans le décodeur, ainsi que des paramètres d'affichage à l'écran pour l'affichage d'un écran d'attente et d'une grille de programmes complétée par des descriptions et des bandes- annonces de programmes ;
- des deuxièmes blocs de données (PD1, PD2, PD3) contenant chacun une bande annonce vidéo et/ou audio d'une transmission vidéo et/ou audio référencée dans ledit guide électronique de programmes ; et
- des trosièmes blocs de données (TD1, TDi, TDj) contenant une description textuelle des programmes référencés dans le guide électronique de programmes, dans le flux duquel les troisièmes blocs de données (TD1, TDi, TDj) ainsi que les premiers blocs de données d'en-tête (DD, MC, SD) sont répétés dans le flux entre les deuxièmes blocs de données (PD1, PD2, PD3), et
(b) génération d'une grille de programmes dans le décodeur, la grille de programmes contenant premièrement une description textuelle des programmes si des troisièmes blocs de données (TD1, TDi, TDj) ont été reçus d'abord par le décodeur ou contiennent premièrement une bande-annonce vidéo et/ou audio si les deuxièmes blocs de données (PD1, PDd2, PD3) ont été reçus d'abord par le décodeur.
